(19) Europäisches Patentamt
European Patent Office
Office européen des brevets

(11) **EP 4 440 035 A1**

(12) **DEMANDE DE BREVET EUROPEEN**

(43) Date de publication:
**02.10.2024 Bulletin 2024/40**

(21) Numéro de dépôt: **24165232.0**

(22) Date de dépôt: **21.03.2024**

(51) Classification Internationale des Brevets (IPC):
*H04L 9/32* $^{(2006.01)}$     *G06F 16/10* $^{(2019.01)}$
*G09C 1/00* $^{(2006.01)}$     *G06F 11/10* $^{(2006.01)}$
*G06F 7/02* $^{(2006.01)}$

(52) Classification Coopérative des Brevets (CPC):
**G06F 7/02; G06F 11/1004; G09C 1/00;**
**H04L 9/3239;** G06F 2207/7271; H04L 2209/26

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **24.03.2023 FR 2302829**

(71) Demandeur: **STMicroelectronics International
N.V.**
**1228 Plan-les-Ouates, Geneva (CH)**

(72) Inventeurs:
• **BLANC, Pierre-Alexandre**
**1140 EVERE (BE)**
• **VAN ASSCHE, Gilles**
**1200 WOLUWE-ST-LAMBERT (BE)**

(74) Mandataire: **Cabinet Beaumont**
**4, Place Robert Schuman**
**B.P. 1529**
**38025 Grenoble Cedex 1 (FR)**

(54) **VERIFICATION D'UNE DONNEE**

(57) La présente description concerne un procédé de vérification d'une première donnée par une première formule mathématique :

$$k = XOR_{i=1}^{N}(Xi)$$

dans laquelle :
- k représente ladite première donnée ;

- $XOR_{i=1}^{N}$ représente l'application d'une première fonction logique OU EXCLUSIF à N entrées, N étant un entier ; et
- Xi représente N deuxièmes données (X1, ..., XN) indépendantes de la première donnée, i variant de 1 à N, ledit procédé comprenant une étape de vérification (404) d'une deuxième formule mathématique :

$$CRC(k) = XOR_{i=1}^{N}(CRC(X_i))$$

dans laquelle CRC( ) représente l'image d'une donnée par une deuxième fonction de contrôle de redondance cyclique linéaire par rapport à la fonction logique OU EX-CLUSIF.

**Fig. 4**

**Description**

<u>Domaine technique</u>

La présente description concerne de façon générale le traitement de données sensibles et/ou secrètes, et, plus particulièrement, la sécurité du traitement de telles données. La présente description se rapporte plus particulièrement à la vérification et à la détection d'erreur d'une telle donnée, comme une clé de chiffrement et/ou de déchiffrement.

<u>Technique antérieure</u>

Différentes techniques de sécurisation de données secrètes et/ou sensibles sont utilisées de nos jours. Le chiffrement de données est l'une d'entre elles, et consiste en l'application d'un ou plusieurs algorithmes de cryptographie à des données. Beaucoup d'algorithmes de cryptographie utilisent des clés de chiffrement et/ou de déchiffrement.

Avant d'utiliser une clé de chiffrement et/ou de déchiffrement, il est commun de vérifier si la clé de chiffrement stockée en mémoire est correcte, c'est-à-dire ne présente pas d'erreur.

Il serait souhaitable de pouvoir améliorer au moins en partie certains aspects des procédés de vérification et/ou de détection d'erreurs.

<u>Résumé de l'invention</u>

Il existe un besoin pour une sécurisation de données sensibles et/ou secrètes plus efficace.

Il existe un besoin pour une sécurisation de clé de chiffrement et/ou de déchiffrement plus efficace.

Un mode de réalisation pallie tout ou partie des inconvénients des procédés de vérification et/ou de détection d'erreurs d'une donnée.

Un mode de réalisation prévoit un procédé de vérification et/ou de détection d'erreurs d'une donnée plus sécurisé.

Un mode de réalisation prévoit un procédé de vérification et/ou de détection d'erreurs d'une donnée ne rendant pas ladite donnée accessible.

Un mode de réalisation prévoit un procédé de vérification et/ou de détection d'erreurs d'une donnée présentant une décomposition booléenne.

Un mode de réalisation prévoit un procédé de vérification et/ou de détection d'erreurs d'une donnée plus rapide d'exécution.

Un mode de réalisation prévoit un procédé de vérification d'une première donnée (k) donnée par une première formule mathématique (A) :

$$k = XOR_{i=1}^{N}(Xi)$$

dans laquelle :

- k représente ladite première donnée (k) ;

- $XOR_{i=1}^{N}$ représente l'application d'une première fonction logique OU EXCLUSIF à N entrées, N étant un entier ; et

- Xi représente N deuxièmes données (X1, ..., XN) indépendantes de la première donnée (k), i variant de 1 à N,

ledit procédé comprenant une étape de vérification (404) d'une deuxième formule mathématique (B) :

$$CRC(k) = XOR_{i=1}^{N}(CRC\,(X_i))$$

dans laquelle CRC( ) représente l'image d'une donnée par une deuxième fonction de contrôle de redondance cyclique linéaire par rapport à la fonction logique OU EXCLUSIF.

Un autre mode de réalisation prévoit un dispositif électronique adapté à mettre en oeuvre un procédé de vérification d'une première donnée (k) donnée par une première formule mathématique (A) :

$$k = XOR_{i=1}^{N}(Xi)$$

dans laquelle :

- k représente ladite première donnée (k) ;

- $XOR_{i=1}^{N}$ représente l'application d'une première fonction logique OU EXCLUSIF à N entrées, N étant un entier ; et

- Xi représente N deuxièmes données (X1, ..., XN) indépendantes de la première donnée (k), i variant de 1 à N,

ledit procédé comprenant une étape de vérification (404) d'une deuxième formule mathématique (B) :

$$CRC(k) = XOR_{i=1}^{N}(CRC(X_i))$$

dans laquelle CRC( ) représente l'image d'une donnée par une deuxième fonction de contrôle de redondance cyclique linéaire par rapport à la fonction logique OU EXCLUSIF.

Selon un mode de réalisation, ladite première fonction logique OU EXCULSIF à N entrées est donnée par la troisième formule mathématique suivante :

$$XOR_{i=1}^{N}(Xi) = X1 \, xor \, X2 \, xor \, .... \, xor \, XN$$

dans laquelle xor représente une fonction logique OU EXCLUSIF à deux entrées.

Selon un mode de réalisation, la première donnée (k) n'est pas stockée en mémoire, l'image de la première donnée (k) par ladite deuxième fonction est stockée en mémoire, et lesdites N deuxièmes données sont stockées en mémoire.

Selon un mode de réalisation, au moins une desdites N deuxièmes données est obtenue de façon aléatoire.

Selon un mode de réalisation, la deuxième fonction (300) est une fonction de contrôle de redondance cyclique de type polynomiale.

Selon un mode de réalisation, la deuxième fonction (300) est une fonction de contrôle de redondance cyclique de type polynomiale utilisé dans l'algorithme connu sous la dénomination commerciale CRC32.

Selon un mode de réalisation, l'entier N est supérieur ou égal à deux.

Selon un mode de réalisation, la première donnée (k) est une clé de chiffrement et/ou de déchiffrement.

Selon un mode de réalisation, ladite première donnée (k) est une clé pouvant être utilisée dans différents types d'algorithme de cryptographie comme l'AES.

Selon un mode de réalisation, ladite première donnée (k) est une donnée pouvant être utilisée dans différents types d'algorithme de cryptographie comme les algorithmes de cryptographie sur courbes elliptiques, les algorithmes de signature comme ceux connus sous la dénomination commerciale CRYSTALS-Dilithium, ou les algorithmes d'encapsulation de clé connus sous la dénomination commerciale Kyber.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, très schématiquement et sous forme de blocs, un exemple de dispositif électronique adapté à mettre en oeuvre les modes de réalisation décrits en relation avec les figures 2 à 4 ;

la figure 2 représente, très schématiquement et sous forme de blocs, un exemple de décomposition booléenne d'une donnée ;

la figure 3 représente, très schématiquement et sous forme de blocs, une fonction de contrôle de redondance cyclique ;

la figure 4 représente un schéma bloc illustrant un mode de mise en oeuvre d'un procédé de vérification d'une clé de chiffrement et/ou de déchiffrement ; et

la figure 5 représente un schéma bloc illustrant une mode de mise en oeuvre d'un procédé d'utilisation d'une clé de chiffrement et/ou de déchiffrement.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Les modes de réalisation décrits ci-après se rapportent à la vérification et/ou la détection d'erreur d'une donnée, par exemple, avant son utilisation ou son stockage en mémoire. Il s'agit plus précisément de la vérification et/ou la détection d'erreur d'une donnée sensible et/ou secrète, comme une clé de chiffrement et/ou de déchiffrement.

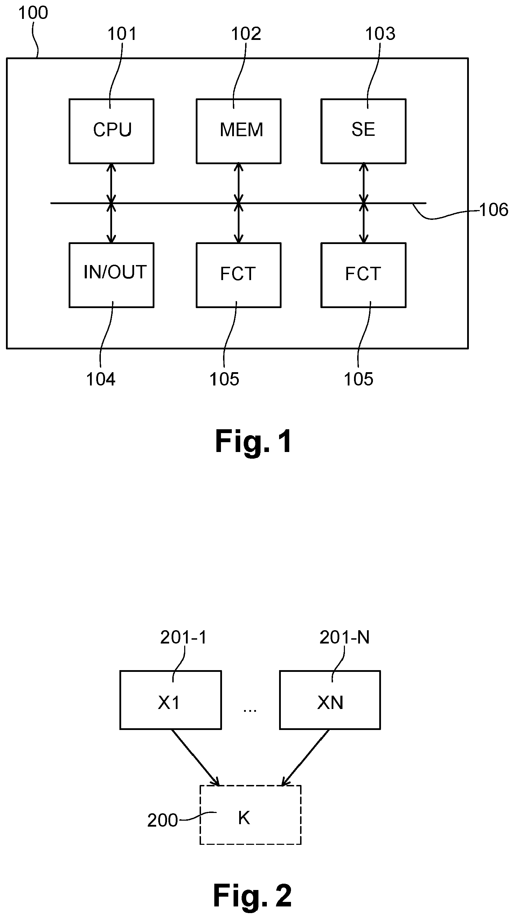

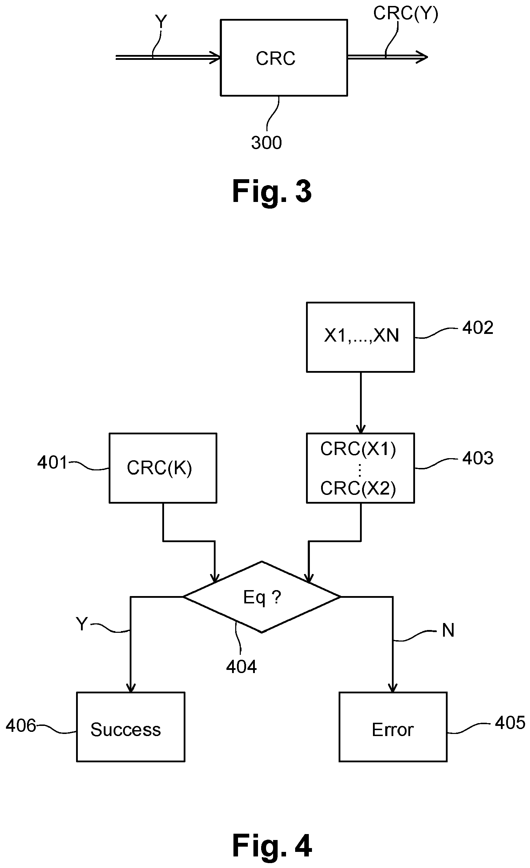

Les modes de réalisation décrits ci-après concernent, plus particulièrement, un procédé de vérification, ou procédé de détection d'erreur, dans lequel la donnée qui est vérifiée n'est jamais rendue accessible. Pour cela, le procédé de vérification utilise une décomposition booléenne de la donnée à vérifier et une fonction contrôle de redondance cyclique. La décomposition booléenne d'une donnée est décrite en détails en relation avec la figure 2. De plus, une description détaillée d'une fonction de contrôle de redondance cyclique est réalisée en relation avec la figure 3. Le procédé de vérification en lui-même est décrit en relation avec la figure 4.

La figure 1 est un schéma bloc représentant, très schématiquement, une architecture d'un exemple d'un dispositif électronique 100 adapté à exécuter le mode de mise en oeuvre du procédé de vérification, ou procédé de détection d'erreur, d'une donnée décrit ci-après.

Le dispositif électronique 100 comprend un processeur 101 (CPU) adapté à mettre en oeuvre différents traitements de données stockées dans des mémoires et/ou fournies par d'autres circuits du dispositif 100.

Le dispositif électronique 100 comprend, en outre, différents types de mémoires 102 (MEM), parmi lesquelles, par exemple, une mémoire non volatile, une mémoire volatile 103, et/ou une mémoire morte 104. Chaque mémoire 102 est adaptée à stocker différents types de données.

Le dispositif électronique 100 comprend, en outre, par exemple, un élément sécurisé 103 (SE) adapté à traiter des données sensibles et/ou secrètes. L'élément sécurisé 103 peut comprendre son ou ses propres processeurs, son ou ses propres mémoires, etc.

On appelle, dans la suite de la description, données sensibles et données secrètes des données dont le contenu n'est pas destiné à être public, et, donc, dont l'accès est restreint à certaines personnes et/ou circuits particuliers. Une clé de chiffrement et/ou de déchiffrement est considérée comme étant une donnée sensible et/ou secrète puisqu'une telle clé permet d'encoder des données sensibles et/ou secrètes, et/ou de décoder des données chiffrées.

Le dispositif électronique 100 peut comprendre, en outre, des circuits d'interface 104 (IO/OUT) adaptés à envoyer et/ou à recevoir des données provenant de l'extérieur du dispositif 100. Les circuits d'interface 104 peuvent être, en outre adaptés à mettre en oeuvre un affichage de données, par exemple, un écran d'affichage.

Le dispositif électronique 100 comprend, en outre, différents circuits 105 (FCT) adaptés à réaliser différentes fonctions. A titre d'exemple, les circuits 105 peuvent comprendre des circuits de mesure, des circuits de conversion de données, etc.

Le dispositif électronique 100 comprend, en outre, un ou plusieurs bus de données 106 adaptés à transférer des données entre ses différents composants.

La figure 2 illustre, très schématiquement et sous forme de blocs, un exemple de décomposition booléenne d'une donnée 200 (k).

La donnée 200, appelée donnée k dans la suite de la description, est une donnée numérique. La donnée k, peut être, par exemple, une donnée sensible et/ou secrète adaptée à être utilisée par un dispositif du type du dispositif 100 décrit en relation avec la figure 1. Selon un mode de réalisation, la donnée k est une clé de chiffrement et/ou de déchiffrement. Selon un exemple de réalisation, la donnée k est une clé de chiffrement et/ou de déchiffrement utilisée dans un algorithme de cryptographie du type de l'AES (Advanced Encryption Standard). Selon un autre exemple de réalisation, la donnée k est une donnée utilisée dans différents types d'algorithme de cryptographie comme, par exemple, les algorithmes de cryptographie sur courbes elliptiques, les algorithmes de signature comme, par exemple, ceux connus sous la dénomination commerciale CRYSTALS-Dilithium, ou les algorithmes d'encapsulation de clé comme, par exemple, ceux connus sous la dénomination commerciale Kyber.

La donnée k est, par exemple, obtenue par un générateur de nombres aléatoires que comporte le dispositif 100, par exemple constitué par une des fonctions des circuits 105. Selon un autre exemple, la donnée k est générée par le processeur 101 ou par l'élément sécurisé 103.

La donnée k présente une décomposition booléenne en N données Xi, N étant un entier et i étant un entier variant de 1 à N. Autrement dit, la donnée k est décomposée en N données 201-1 (X1), ..., 201-N (XN), appelées données X1, ..., XN dans la suite de la description. La décomposition booléenne utilise la fonction logique OU EXCLUSIF. La donnée k est liée aux données X1, ..., XN par la formule mathématique A suivante :

$$k = XOR_{i=1}^{N}(Xi)$$

dans laquelle $XOR_{i=1}^{N}$ représente une fonction logique OU EXCLUSIF à N entrées.

Une notation équivalente de la formule A donnée précédemment est la suivante :

$$k = X1\ xor\ X2\ xor\ ...\ xor\ XN$$

dans laquelle xor représente la fonction logique OU EXCLUSIF à deux entrées.

Selon un mode de réalisation, la donnée k n'est pas stockée dans une mémoire 102 du dispositif électronique 100, mais ce sont seulement les données X1, ..., XN qui sont stockées dans une ou plusieurs mémoires 102 du dispositif électronique 100.

De plus, selon un mode de réalisation, les données X1 à XN sont toutes indépendantes de la donnée k. Dit autrement, les données X1 à XN ne sont reliées à la donnée k que par la formule mathématique A donnée précédemment.

Selon un exemple, la décomposition de la donnée k est obtenue en utilisant une fonction de génération de données aléatoires. N-1 données X1 à XN-1 sont, par exemple, générées aléatoirement, et la dernière donnée XN est obtenue en appliquant la formule A.

Il existe une multitude de décompositions booléennes possible pour une donnée. Il est donc possible de changer de données de décomposition, par exemple si les données X1, ..., XN sont devenues accessibles. Il suffit, par exemple, de générer N-1 nouvelles données aléatoires et de déterminer la dernière en appliquant la formule A.

La figure 3 illustre, très schématiquement et sous forme de blocs, un mode de mise en oeuvre d'une fonction 300 (CRC).

La fonction 300 est une fonction de contrôle de redondance cyclique (CRC, Cyclic Redundancy Check) adaptée à recevoir, en entrée, une donnée Y et à fournir, en sortie, une donnée CRC(Y). Une telle fonction est utilisée pour détecter des erreurs. La fonction CRC est, par exemple mise en oeuvre par le processeur 101, l'élément sécurisé 103 ou l'une des fonctions des circuits 105.

De plus, selon un mode de réalisation, la fonction 300 est une fonction linéaire par rapport à la fonction logique OU EXCLUSIF. Autrement dit, la relation mathématique suivante est vérifiée :

$$CRC(Y\ xor\ Z) = CRC(Y)\ xor\ CRC(Z)$$

Dans laquelle Y et Z sont toutes les deux des données.

Des fonctions de contrôle de redondance cyclique sont connues par la personne du métier. Selon un exemple, la fonction 300, peut être, par exemple, une fonction contrôle de redondance cyclique de type polynomiale. Selon un exemple, la fonction utilisé dans l'algorithme est connu sous la dénomination commerciale CRC32.

La figure 4 est un schéma bloc représentant un mode de mise en oeuvre d'un procédé de vérification, ou d'un procédé de détection d'erreur, de la donnée k définie en relation avec la figure 2 et utilisant la fonction 300 décrite en relation avec la figure 3.

Le procédé de vérification de la donnée k permet de détecter des erreurs de transmission, de combinaison et/ou d'application d'algorithme. Le procédé de vérification est par exemple utilisée avant l'utilisation de la donnée k.

Ce procédé de vérification est adapté à être mis en oeuvre par le dispositif 100 décrit en relation avec la figure 1, ou par un dispositif du type du dispositif 100.

A une étape d'initialisation 401 (CRC(k)), une donnée CRC(k) représentant l'image de la donnée k par la fonction 300 est obtenue par le processeur 101, l'élément sécurisé 103, ou par l'une des fonctions mises en oeuvre par les circuits 105. Selon un mode de réalisation, l'image CRC(k) est calculée et stockée dans une mémoire 102 du dispositif 100, mais la donnée k elle-même n'est pas stockée en mémoire. Cette étape peut être mise en oeuvre dès la génération de la donnée k.

A une autre étape d'initialisation 402 (X1, ..., XN), la décomposition booléenne de la donnée k en les données X1 à XN est obtenue, par exemple, en utilisant la technique décrite en relation avec la figure 2, c'est-à-dire en utilisant le processeur 101, l'élément sécurisé 103, ou l'une des fonctions mises en oeuvre par les circuits 105. Selon un mode de réalisation, les données X1 à XN sont toutes stockées dans une ou plusieurs mémoires 102 du dispositif 100. Cette étape peut, également, être mise en oeuvre dès la génération de la donnée k.

A une étape 403 (CRC(X1), ..., CRC(XN)), postérieure à l'étape 402, des données CRC(X1) à CRC(XN) représentant les images des données X1 à XN par la fonction 300 sont obtenues par le processeur 101, l'élément sécurisé 103, ou par l'une des fonctions mises en oeuvre par les circuits 105. Selon un mode de réalisation préféré, les images CRC(X1) à CRC(XN) sont calculées et stockées, de façon temporaire, dans une mémoire 102 du dispositif 100. Selon une variante, cette étape peut être mise en oeuvre dès la génération de la donnée k, comme l'étape 402, et les images CRC(X1) à CRC(XN) peuvent être stockées pendant une longue durée dans une mémoire du dispositif 100.

A une étape 404 (Eq ?), postérieure aux étapes 401 et 403, la formule mathématique B suivante est vérifiée par le processeur 101, l'élément sécurisé 103, ou par l'une des fonctions mises en oeuvre par les circuits 105 :

$$CRC(k) = XOR_{i=1}^{N}(CRC\,(X_i))$$

Une notation équivalente de la formule B donnée précédemment est la suivante :

$$CRC(k) = CRC(X1)xor\ CRC(X2)xor\ ...\ xor\ CRC(XN)$$

Pour effectuer ces vérifications, les données obtenues aux étapes 401 à 403 sont utilisées.

Si la formule B est vérifiée (sortie Y) alors l'étape suivante est une étape 405 (Success). Sinon (sortie N), l'étape suivante est une étape 406 (Error).

A l'étape 405, la formule B a été vérifiée, il est donc considéré que les données X1 à XN sont correctes et permettent bien d'obtenir la donnée k en utilisant la formule A décrite précédemment. Les données X1 à XN peuvent être utilisées, par le processeur 101, l'élément sécurisé 103, ou par l'une des fonctions mises en oeuvre par les circuits 105. dans des calculs linéaires par rapport à l'opération OU EXCLUSIF à la place de la donnée k, comme des calculs cryptographiques.

A l'étape 406, la formule B n'est pas vérifiée. La décomposition de la donnée k en les données X1 à XN présente donc des erreurs, et les données X1 à XN ne peuvent donc être utilisées pour obtenir la donnée k en utilisant la formule A.

Un avantage de ce procédé de vérification est qu'il est plus rapide à mettre en oeuvre qu'un procédé de vérification classique, comme un procédé de vérification utilisant des calculs cryptographiques complexe comme l'AES ou des calculs sur courbes elliptiques.

Un autre avantage de ce procédé est que le risque que la donnée k qui est vérifiée soit accessible est bien moindre qu'avec un procédé de vérification classique. En effet, la donnée k n'est pas stockée en mémoire, et les données X1 à XN sont toutes indépendantes de la donnée k. Il faudrait donc avoir accès à toutes les données X1 à XN pour obtenir la donnée k.

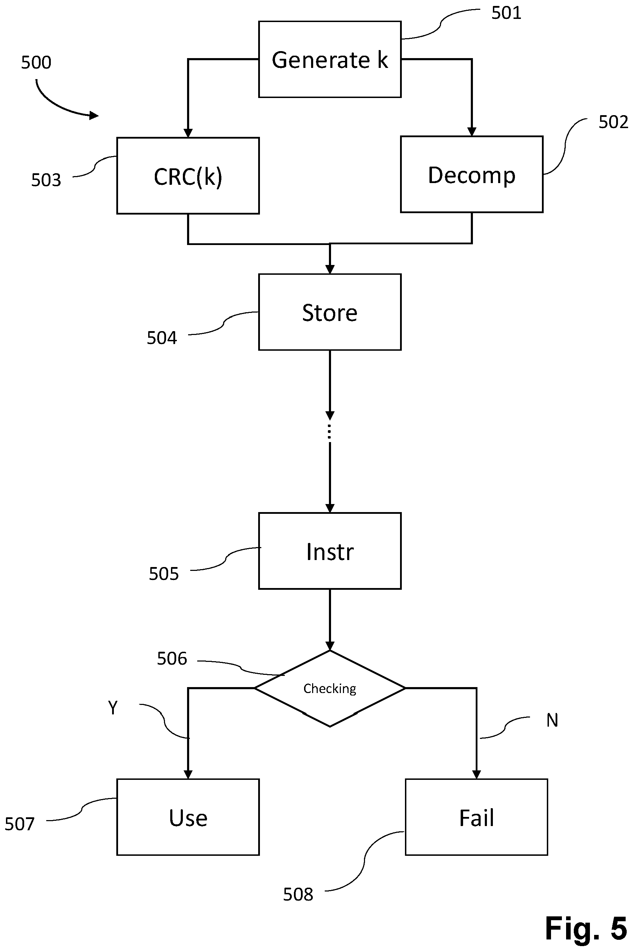

La figure 5 est un schéma bloc illustrant un procédé d'utilisation de la donnée k décrite en relation avec la figure 2. Ce procédé est mis en oeuvre par un dispositif électronique D du type du dispositif électronique 100 décrit en relation avec la figure 1. Plus particulièrement, le dispositif électronique D comprend au moins un processeur P et une mémoire M. Le processeur P peut être n'importe quel type de processeur décrit en relation avec la figure 1, et la mémoire M peut être n'importe quel type de mémoire décrite en relation avec la figure 1.

A une étape initiale 501 (Generate k), mise en oeuvre par le processeur P, la donnée k est générée. Selon un mode de réalisation, la donnée k est une donnée sensible et/ou secrète, telle qu'une clé de chiffrement et/ou de déchiffrement comme décrit en relation avec la figure 2, qui ne peut pas être stockée en mémoire.

A une étape 502 (Decomp), successive à l'étape 501, mise en oeuvre par le processeur P, une décomposition booléenne de la donnée k est préparée. Dit autrement, les N données X1, ..., XN indépendantes, décrites en relation avec la figure 2, sont générées comme décrit en relation avec la figure 2.

A une étape 503 (CRC(k)), successive à l'étape 501, mise en oeuvre par le processeur P, une image CRC(k) de la donnée k par une fonction de contrôle de redondance cyclique, comme la fonction 300 décrite en relation avec la figure 3, est calculée en utilisant la donnée k.

Selon une variante de réalisation, l'étape 503 est successive à l'étape 502, et l'image CRC(k) est calculée en utilisation les données X1, ..., XN, et pas directement la donnée k.

A une étape 504 (Store), successives aux étapes 502 et 503, mise en oeuvre par le processeur P et la mémoire M, les données X1, ..., XN et l'image CRC(k) sont toutes stockées dans la mémoire M. Toutes les copies existantes de la donnée k sont supprimées pour des raisons de sécurité.

A une étape 505 (Instr), successive à l'étape 504, mise en oeuvre par le processeur P, le processeur P reçoit une instruction faisant requête de l'utilisation de la donnée k. Si la donnée k est une clé de chiffrement et/ou de déchiffrement, l'instruction peut être une instruction de chiffrement et/ou de déchiffrement. Pour mettre en oeuvre cette instruction, le processeur P n'a seulement accès qu'aux données X1, ..., XN, et n'a pas accès à la donnée k.

A une étape 506 (Checking), successive à l'étape 505, mise en oeuvre par le processeur P, le processeur P met en oeuvre le procédé de vérification décrit en relation avec la figure 4, pour vérifier si toutes les données X1, ..., XN ont été correctement retrouvées dans la mémoire M, et si aucune des données X1, ..., XN n'ont été modifiées. Si le procédé de vérification décrit en relation avec la figure 4 est un succès (sortie Y) l'étape suivante est une étape 507 (Use). Sinon l'étape suivante est une étape 508 (Fail).

A l'étape 507, mise en oeuvre par le processeur P, le procédé de la figure 4 a prouvé que toutes les données X1, ..., XN sont correctes, le processeur P peut donc mettre en oeuvre l'instruction reçue à l'étape 505 en utilisant les données X1, ..., XN.

A l'étape 508, mise en oeuvre par le processeur P, le procédé de la figure 4 a prouvé qu'au moins une des données X1, ..., XN est incorrecte, le processeur P ne peut donc pas mettre en oeuvre l'instruction reçue à l'étape 505.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

**Revendications**

1. Procédé de vérification d'une première donnée (k) donnée par une première formule mathématique (A) :

$$k = XOR_{i=1}^{N}(Xi)$$

dans laquelle :

- k représente ladite première donnée (k) ;

- $XOR_{i=1}^{N}$ représente l'application d'une première fonction logique OU EXCLUSIF à N entrées, N étant un entier ; et

- Xi représente N deuxièmes données (X1, ..., XN) indépendantes de la première donnée (k), i variant de 1 à N,

ledit procédé comprenant une étape de vérification (404) d'une deuxième formule mathématique (B) :

$$CRC(k) = XOR_{i=1}^{N}(CRC(X_i))$$

dans laquelle CRC( ) représente l'image d'une donnée par une deuxième fonction (300) de contrôle de redondance cyclique linéaire par rapport à la fonction logique OU EXCLUSIF.

2. Dispositif électronique adapté à mettre en oeuvre un procédé de vérification d'une première donnée (k) donnée par une première formule mathématique (A) :

$$k = XOR_{i=1}^{N}(Xi)$$

dans laquelle :

   - k représente ladite première donnée (k) ;

   - $XOR_{i=1}^{N}$ représente l'application d'une première fonction logique OU EXCLUSIF à N entrées, N étant un entier ; et
   - Xi représente N deuxièmes données (X1, ..., XN) indépendantes de la première donnée (k), i variant de 1 à N,

ledit procédé comprenant une étape de vérification (404) d'une deuxième formule mathématique (B) :

$$CRC(k) = XOR_{i=1}^{N}(CRC(X_i))$$

dans laquelle CRC( ) représente l'image d'une donnée par une deuxième fonction (300) de contrôle de redondance cyclique linéaire par rapport à la fonction logique OU EXCLUSIF.

3. Procédé selon la revendication 1, ou dispositif selon la revendication 2, dans lequel ladite première fonction logique OU EXCULSIF à N entrées est donnée par la troisième formule mathématique suivante :

$$XOR_{i=1}^{N}(Xi) = X1\ xor\ X2\ xor\ ....xor\ XN$$

dans laquelle xor représente une fonction logique OU EXCLUSIF à deux entrées.

4. Procédé selon la revendication 1 ou 3, ou dispositif selon la revendication 2 ou 3, dans lequel la première donnée (k) n'est pas stockée en mémoire, l'image de la première donnée (k) par ladite deuxième fonction (CRC) est stockée en mémoire, et lesdites N deuxièmes données sont stockées en mémoire.

5. Procédé selon l'une quelconque des revendications 1, 3 ou 4, ou dispositif selon l'une quelconque des revendications 2 à 4, dans lequel au moins une desdites N deuxièmes données (X1, ..., XN) est obtenue de façon aléatoire.

6. Procédé selon l'une quelconque des revendications 1, 3 à 5, ou dispositif selon l'une quelconque des revendications 2 à 5, dans lequel la deuxième fonction (300) est une fonction de contrôle de redondance cyclique de type polynomiale.

7. Procédé ou dispositif selon la revendication 6, dans lequel la deuxième fonction (300) est une fonction de contrôle de redondance cyclique de type polynomiale utilisé dans l'algorithme connu sous la dénomination commerciale CRC32..

8. Procédé selon l'une quelconque des revendications 1, 3 à 7, ou dispositif selon l'une quelconque des revendications 2 à 7, dans lequel l'entier N est supérieur ou égal à deux.

9. Procédé selon l'une quelconque des revendications 1, 3 à 8, ou dispositif selon l'une quelconque des revendications 2 à 8, dans lequel la première donnée (k) est une clé de chiffrement et/ou de déchiffrement.

**10.** Procédé ou dispositif selon la revendication 9, dans lequel ladite première donnée (k) est une clé pouvant être utilisée dans différents types d'algorithme de cryptographie comme l'AES.

**11.** Procédé ou dispositif selon la revendication 9, dans lequel ladite première donnée (k) est une donnée pouvant être utilisée dans différents types d'algorithme de cryptographie comme les algorithmes de cryptographie sur courbes elliptiques, les algorithmes de signature comme ceux connus sous la dénomination commerciale CRYSTALS-Dilithium, ou les algorithmes d'encapsulation de clé connus sous la dénomination commerciale Kyber.

100

101        102        103

| CPU | MEM | SE |

106

| IN/OUT | FCT | FCT |

104        105        105

## Fig. 1

201-1                201-N

| X1 | ... | XN |

200 —— K

## Fig. 2

Y →[ CRC ]→ CRC(Y)

300

**Fig. 3**

X1,...,XN — 402

401 — CRC(K)          CRC(X1)
                          ⋮          — 403
                      CRC(X2)

Eq ?
404

Y              N

406 — Success        Error — 405

**Fig. 4**

**Fig. 5**

Europäisches
Patentamt

European
Patent Office

Office européen
des brevets

# RAPPORT DE RECHERCHE EUROPEENNE

Numéro de la demande

EP 24 16 5232

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 11 132 466 B2 (IDEMIA FRANCE [FR]) 28 septembre 2021 (2021-09-28) * colonne 5, ligne 3 - colonne 6, ligne 54; figure 2 * * colonne 8, lignes 9-42; figure 3 * ----- | 1-11 | INV. H04L9/32 G06F16/10 G09C1/00 G06F11/10 G06F7/02 |
| X | US 8 307 271 B1 (LIU ZHI-GANG [US] ET AL) 6 novembre 2012 (2012-11-06) * colonne 7, lignes 14-60; figure 4 * ----- | 1,2,6-8 | |
| A | US 8 910 031 B1 (LIU ZHIGANG [US] ET AL) 9 décembre 2014 (2014-12-09) * figures 3,5A * * colonne 2, ligne 40 - colonne 3, ligne 64 * * colonne 9, ligne 3 - colonne 11, ligne 6 * ----- | 1-9 | |
| T | GORJAN ALAGIC ET AL: "Status report on the third round of the NIST Post-Quantum Cryptography Standardization process", NIST, NATIONAL INSTITUTE OF STANDARDS AND TECHNOLOGY (NIST) , 30 mars 2022 (2022-03-30), pages 1-100, XP061078738, DOI: 10.6028/NIST.IR.8413 Extrait de l'Internet: URL:https://nvlpubs.nist.gov/nistpubs/ir/2022/NIST.IR.8413.pdf [extrait le 2022-07-05] * sections 4.1, 4.4 * ----- | 11 | DOMAINES TECHNIQUES RECHERCHES (IPC) H04L G06F G09C |

Le présent rapport a été établi pour toutes les revendications

| Lieu de la recherche | Date d'achèvement de la recherche | Examinateur |
|---|---|---|
| Munich | 19 juillet 2024 | Manet, Pascal |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 16 5232

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-07-2024

| Document brevet cité au rapport de recherche | | Date de publication | Membre(s) de la famille de brevet(s) | | Date de publication |
|---|---|---|---|---|---|
| US 11132466 | B2 | 28-09-2021 | EP | 3502899 A1 | 26-06-2019 |
| | | | ES | 2827873 T3 | 24-05-2021 |
| | | | FR | 3076151 A1 | 28-06-2019 |
| | | | KR | 20190076859 A | 02-07-2019 |
| | | | US | 2019197259 A1 | 27-06-2019 |
| US 8307271 | B1 | 06-11-2012 | AUCUN | | |
| US 8910031 | B1 | 09-12-2014 | AUCUN | | |

EPO FORM P0460

Pour tout renseignement concernant cette annexe : voir Journal Officiel de l'Office européen des brevets, No.12/82